# EUROPÄISCHE PATENTSCHRIFT

(11) **EP 0 398 319 B1**
(45) Veröffentlichungstag und Bekanntmachung des Hinweises auf die Patenterteilung: **13.07.1994**
(21) Anmeldenummer: 90109295.7
(22) Anmeldetag: 17.05.1990
(51) Int. Cl.: G01B 11/24, G01D 5/26

(54) **Verfahren und Vorrichtung zur interferometrischen Detektion von Oberflächenverschiebungen bei Festkörpern**
Method and device for the interferometric detection of surface displacements of solid bodies
Méthode et dispositif pour la détection interférométrique du déplacement de la surface des corps solides

(30) Priorität: 19.05.1989 DE 3916276
(43) Veröffentlichungstag der Anmeldung: 22.11.1990
(73) Patentinhaber: Betriebsforschungsinstitut VDEh Institut für angewandte Forschung GmbH, D-40042 Düsseldorf (DE)
(72) Erfinder: Keck, Roland, Dr. Ing., D-4000 Düsseldorf (DE); Krüger, Bertold, Dipl.-Ing., D-4150 Krefeld-Fischeln (DE)
(74) Vertreter: Plöger, Ulrich

(56) Entgegenhaltungen:
- EP-A- 0 091 826
- EP-A- 0 185 582

## Beschreibung

Die Erfindung bezieht sich auf eine Vorrichtung zur interferometrischen Detektion von Oberflächenverschiebungen bei Festkörpern.

Derartige Vorrichtungen sind nach der EP-A 00 91 826 bekannt. Danach sollte eine Faseroptik als Sensor zur Detektion kleinster Oberflächenverschiebungen bei Festkörpern verwendet werden. Hierfür finden ein Beleuchtungslaser und eine Empfangsoptik Anwendung, die für den Weg der Laserlichtwellen bei Veränderung derselben ausgeführt sind. Es wird jeweils nur ein Lichtleiter zum Sender und Empfänger geführt, der nur mit einem Lichtweg der Lichtquelle in Verbindung steht, so daß die Lichtleiter nicht im geometrischen Sinne zusammengesetzt sind. Die hohen Anforderungen, die an die Empfindlichkeit zu stellen sind, machen diese Entwicklung jedoch technisch sehr aufwendig, wenn sichergestellt sein soll, daß die bestehenden Signale in vorgesehener Weise ausgebildet sein müssen.

Hiervor ausgehend liegt der Erfindung die Aufgabenstellung zugrunde, auf verbesserte Weise Prüfsignale bilden zu können, die der Auswertung zugänglich gemacht werden können. Für die auszuwertenden Signale soll jeder beliebige Teil der sinusförmigen Demodulationskennlinie genutzt werden können, womit insbesondere die Begrenzung auf lediglich den steilsten Teil eines Armes der Sinuskurve bei 90° bzw. 270° Phasenverschiebung entfallen kann.

Zur Lösung dieser Aufgabenstellung sieht ein weiterer Stand der Technik nach der Veröffentlichung von R. Keck, B. Krüger, G. Coen und W. Häsing: "Banddickenmessung an 1230°C heißem Rohr" ein neuartiges Laser-Ultraschallsystem vor, Stahl und Eisen, 1987, S.1057 bis 1060.

Dieses System sieht die Verwendung eines Laser-Interferometers vor, wobei die Oberflächenbewegung des Prüfgutes eine Frequenzmodulation der Strahlung des Beleuchtungslasers hervorrufen, in welcher Frequenz und Amplitude der Ultraschallwelle enthalten sind. Zur Demodulation wird über eine Sammellinse ein Teil des zurückgestreuten Lichtes einem Laufzeit-Interferometer zugeführt, in dem das empfangene Licht einem Strahlteiler aufgespalten und nach Durchlauf unterschiedlich langer Wege zur Interferenz gebracht wird. Dabei interferieren Teile von Wellenzügen miteinander, die zu unterschiedlichen Zeiten den Laser verlassen haben. Bei konstanter Frequenz des empfangenen Laserlichts liegt eine gleichbleibende Phasenzuordnung im Interferometer vor, so daß sich am Detektor eine konstante Helligkeit ergibt. Das Laserlicht erfährt eine sehr geringe Frequenzänderung dürch Ultraschall wegen des Doppelreffektes, die sich mit einem zeitlichen Versatz am Ort der Interferenz auswirkt. Sofern die Phasen einander mit in ursprünglicher Zuordnung überlagern, führen die geänderten Phasenzuordnungen zu unterschiedlichen Helligkeitswerten am Detektor. Die durch Ultraschall bewirkte Frequenzdifferenz der interferierenden Wellen ist ein Maß für die Verstimmung.

Die Verstimmung ist bei Interferenz derjenigen Wellen maximal, die durch maximale Oberflächengeschwindigkeiten in entgegengesetzter Richtung moduliert werden. Maximale Geschwindigkeit herrscht bei den Nulldurchgängen der Ultraschallwelle. Ultraschallwellen, bei denen der zeitliche Abstand der Nulldurchgänge der Laufzeitdifferenz in den Interferometerarmen entspricht, werden am empfindlichsten wahrgenommen. Um das höchste Maß an Empfindlichkeit sicherzustellen, bedarf die Anlage einer sehr aufwendigen Einrichtung zur Nachregulierung, um die entstehenden Signale in befriedigender Weise auswerten zu können. Intensivitätsschwankungen durch rauhe Oberflächen des Prüfgutes oder schrägen Einfall des Laserlichtes, wie sie gerade unter betrieblichen Bedingungen auftreten, müssen ausgeregelt werden.

Die Erfindung löst diese Aufgabenstellung durch die Merkmale des unabhängigen Anspruchs 1.

Vorteilhafte Angestaltungen sind den abhängigen Ansprüchen zu entnehmen.

Somit führt die Erfindung zu einer Bündelung einer Vielzahl von Interferometern (Typ Michelson oder Mach-Zehnder), die alle in der Bildebene der Sende- und Empfangsoptik enden. Im Anschluß hieran wird das von den Lichtleitern geführte Licht der Teilstrahlen des Beleuchtungslasers, also des Beleuchtungslicht, entsprechend den optischen Abbildungsgesetzen auf die Prüfgutoberfläche projiziert. Die Rückstrahlung des Streulichtes gelangt zu einem ausreichenden Teil wiederum in die Bildebene der Sende- und Empfangsoptik und wird in die Lichtleiter eingekoppelt, aus denen es ausgetreten ist.

Die bei Interferenz zweier Wellenzüge durch den Helligkeitsverlauf bei Phasenverschiebung gekennzeichnete Demodulationskennlinie ist sinusförmig. Da das erfindungsgemäße System keine Regelung erforderlich macht, sind sämtliche Phasenzuordnungen bei der genannten Demodulationskennlinie möglich.

Die erfindungsgemäß wenigstens betragsmäßig oder nur im Umfang ihrer positiven Beträge zu berücksichtigenden Signale führen dazu, daß im Wege der Vorverarbeitung der letzteren keine Auslöschungen durch negative Werte am fallenden Sinusarm eintreten können. Daneben ist insbesondere eine Quadrierung der Einzelsignale sinnvoll, weil für diesen Fall sämtliche Signalanteile als postive Werte zur Verfügung gestellt werden können.

Zur Veranschaulichung der Erfindung wird auf die Zeichnungen Bezug genommen. Darin zeigen, jeweils in schematischer Darstellung:
Figur 1 ein einzelnes Interferometer der erfindungsgemäß zur An wendung gelangenden Art, während
Figur 2 eine gesamte Meßanordnung in schematischer Darstellung wiedergibt.

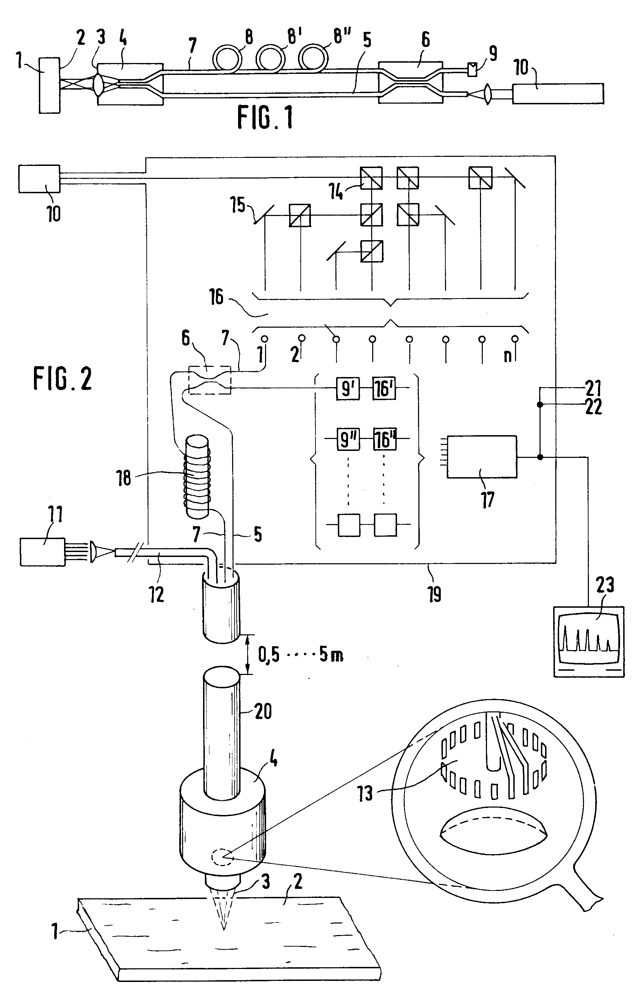

Figur 1 zeigt das Prüfgut 1, an dessen Oberfläche 2 die genannten Ultraschall-Ereignisse bestehen. Zu diesem Zweck unterliegt das Prüfgut 1 der Anregung der Ulraschall-Schwingungen, für welchen Zweck beispielsweise ein Schwingquarz angekoppelt sein kann. Indes können Schwingungen auch mittels eines gepulsten, energiereichen Lasers erzeugt werden.

Im räumlichem Abstand vom Prüfgut 1 und dessen Oberfläche 2 erkennt man die oberflächige Stirnseite 3 der Sende- und Empfangsoptik 4, die für sämtliche Interferometer gemeinschaftlich vorgesehen ist.

Ein Arm des Interferometers führt von der Sende- und Empfangsoptik 4 unmittelbar zum Koppler 6, während der andere Arm 7 wahlweise in einer oder mehreren der Stufen 8, 8' und 8'' eine Wegverlängeung erfährt, bevor er in den Koppler 6 eintritt. Am Austritt aus letzterem mündet der Lichtleiter in den Detektor 9. Somit bestehen für den zurückführenden Lichtweg zwei unterschiedliche Wege vor der Interferenzbildung.

Die Gesamtanordnung gemäß Figur 2 sieht einen Laser 11 zur Anregung, der durch gepulsten Betrieb das Prüfgut 1 zu Ultraschallschwingungen anregt. Zu diesem Zweck führt der Lichtstrahl des Lasers 11 über den Lichtleiter 12 zur gemeinsamen Sende- und Empfangsoptik 4, aus deren Stirnseite 3 die Lichtimpulse austreten. Die sich auf der Oberfläche des Prüfgutes 1 ergebenden Ultraschall-Ereignisse werden durch Rückstrahlung der vom Beleuchtungslaser 10 ausgehenden Teilstrahlen aufgenommen, indem jedem Teilstrahl eine eigenes Interferometer zugeordnet ist. Die Anordnung kann, wie im vergrößerten Ausschnitt 13 veranschaulicht ist, geometrisch regelmäßig sein, jedoch kann sie auch irregulär vorliegen. Die Lichtleiter 5 und 7 sind, wie bereits in Bezug auf Figur 1 dargestellt wurde, mehrfach vorhanden, und zwar in jeweils paariger Zuordnung. Der vom Lichtleiter 7 gebildete Arm erfährt eine optische Verzögerung 18, bevor er in den Koppler 16 eintritt.

Vom Beleuchtungslaser 10 ausgehend sind Umlenkprismen 14 und Umlenkspiegel 15 zur Bildung von im dargestellten Beispielsfall 8 Teilstrahlen vorgesehen, deren jeder eine abweichende optische Weglänge aufweist. Diese Teilstrahlen erfahren im Koppler 6 eine Einkopplung in den Lichtleiter 7. Mit letzterem koppeln die vom zurückgestrahlten Laserlicht beaufschlagten Lichtleiter 5, bevor sie in den Detektoren 9', 9''... endigen. Letztere können noch mit Quadrierern 16', 16'' ... versehen sein, so daß nicht absolute Beträge gebildet werden müssen, sondern quadrierte Beträge vorliegen. In beiden Fällen sind negative und somit auch sich aufhebende Werte ausgeschlossen. Die Quadrierer 16', 16''... sind auf einen Summierer 17 geschaltet, dessen Ausgang die weitere Signalverarbeitung in bekannter Weise mittels Monitor bzw. Datenverarbeitung gestattet.

Die erfindungsgemäße Vorrichtung ist weitgehend innerhalb eines Schutzgehäuses 19 angeordnet, das mit Eingängen für den Beleuchtungslaser 10 und für den der Anregung dienenden Laser 11 versehen ist, wohingegen die verschiedenen Lichtleiter aus dem Gehäuse austreten und mit einem Schutzschlauch 20 umhüllt sind. Die Signalausgänge 21 und 22 dienen der vorgesehenen Datenverarbeitung, wohingegen eine unmittelbare Signaldarstellung mittels des Monitors 23 erfolgt.

## Patentansprüche

1. Vorrichtung zur interferometrischen Detektion von Oberflächenverschiebungen bei Festkörpern, insbesondere von Ultraschall-Ereignissen auf Oberflächen (2) von zu Ultraschallschwingungen angeregtem Prüfgut (1), wobei ein Beleuchtungslaser (10) auf die Prüfgutoberfläche (2) einstrahlt und ein Teil der Rückstrahlung nach Durchlauf von unterschiedlichen Weglängen mit dem anderen Teil der Rückstrahlung zur Interferenz gebracht wird, auf deren Feststellung ein Detektor (9) eingestellt ist, und wobei ein Laserlichtwellenweg zum Detektor führt,
dadurch gekennzeichnet, daß die Strahlführung der Vorrichtung derart gestaltet ist,
daß der Austrittsstrahl des Beleuchtungslasers (10) in mehrere Einzelstrahlen aufgeteilt wird, von denen jeder mittels Lichtleiter (7) die Prüfgutoberfläche (2) an einer gemeinsamen Meßstelle beaufschlagt,
deren Rückstrahlung auf mehrere, örtlich differenziert angeordnete Rezeptoren von Detektorlichtleitern auftrifft, wobei für die Detektorlichtleitung zur Erzeugung einer Laufzeitdifferenz unterschiedliche Lichtweglängen bestehen,
wobei Signalverarbeitungsmittel (17) vorgesehen sind, in denen die detektierten Signale mit weiteren, in gleicher Weise detektierten Signalen unter Ausschluß von Aufhebungen derselben addierbar und zur Erkennung des Ereignisses verwendbar sind,
und daß die Lichtwellen jeweils eines Lichtleiterpaares (5, 7), bevor es in den Detektoren (9) endet, in einem Koppler (6) mit dem vom Laser zur Sende- und Empfangseinheit (4) laufenden Licht zur Interferenz gebracht werden.

2. Vorrichtung nach Anspruch 1,
dadurch gekennzeichnet,
daß für die Aufteilung der einzelnen Strahlen der Beleuchtungslaser (10) eine mit Umlenkprismen (14) und Umlenkspiegeln (15) ausgeführte Mehrfachstrahlteilanordnung aufweist, wobei Lichtleiterpaare (5, 7) auf in gleicher Anzahl vorhandene Detektoren (9) gerichtet sind.

3. Vorrichtung nach den Ansprüchen 1 und 2,
dadurch gekennzeichnet,
daß den Detektoren (9',9'') Quadrierer (16' 16'') und/oder Betragsbildner nachgeschaltet sind, an die sich ein gemeinsamer Summierer (17) anschließt, dessen Ausgang für eine Datenverarbeitung geschaltet ist.

## Claims

1. Device for the interferometric detection of surface dislocation in solids, more particularly of ultrasonic events on the surfaces (2) of test specimens (1) that have been excited to ultrasonic oscillation, whereby an illumination laser (10) irradiates the test specimen surface and one part of the back reflection is made to interfere after different transit lengths with the other part of the back reflection, a detector being set to sense this interference, and a laser optical wave path leading to the detector,
characterized in that
the beam control of the device is designed such that
the beam emerging from the illumination laser (10) is separated into several single beams, each of which being directed by means of an optical wave guide (7) so as to impinge on a common measuring spot on the test specimen surface (2),
whose back reflection impinges on several detector optical wave guide receivers located at different points, thus providing different optical path lengths for the detector's optical wave guide for the purpose of generating a transit time differential,
whereby signal conditioning means (17) are provided, in which the detected signals may added to other similarly detected signals, without these cancelling each other out, and may be used to detect the event,
and that the light waves in each optical wave guide pair (5, 7) are made, before the pair ends in the detector (9), to interfere in a coupler (6) with the light travelling from the laser to the transmitter/receiver unit (4).

2. Device according to Claim 1,
characterized in that
the illumination laser (10) is provided with a multiple beam separation arrangement with deflector prisms (14) and deflector mirrors (15) to separate the single beams, whereby optical wave guide pairs (5, 7) are aimed at the same number of installed detectors (9).

3. Device according to Claims 1 and 2,
characterized in that
squarers (16', 16'') and/or absolute value generators are connected in series between the detectors (9', 9'') and a common summator (17) whose output circuitry has been configured for data processing.

## Revendications

1. Dispositif de détection interférométrique de modifications superficielles sur des corps solides, en particulier d'évènements ultrasoniques sur des surfaces (2) d'un produit à contrôler (1) excitées par des vibrations ultrasoniques, pour lequel un laser d'éclairage (10) irradie la surface du produit à contrôler (1) et une partie de la rétroréflexion est mise en interférence avec l'autre partie de la rétroréflexion après passage de parcours de longueurs différentes, pour la détermination desquelles est réglé un détecteur (9), et pour lequel un chemin d'ondes lumineuses de laser mène au détecteur,
caractérisé en ce que
le parcours du rayon du dispositif est conçu de telle sorte que: le rayon émergeant du laser d'éclairage (10) est subdivisé en plusieurs rayons individuels dont chacun touche la surface du produit à contrôler (2) sur un point de mesure commun au moyen d'un conducteur lumineux (7),
leur rétroréflexion arrive sur différents récepteurs d'ondes optiques implantés de manière localement différenciée, pour les conducteurs lumineux desquels il existe des longueurs de course lumineuse diffférentes en vue de l'obtention de de temps de transit différenciels,
sont prévus des moyens de traitement de signaux (17) dans lesquels les signaux détectés sont additionnables avec d'autres signaux détectés de la même manière sans neutralisation mutuelle, et sont utilisables pour la détection de l'événement,
et que les ondes lumineuses de chaque paire de conducteur lumineux (5, 7) sont mises en interférence avec la lumière passant du laser à une unité d'émission/réception dans un coupleur (4) avant d'atteindre les détecteurs (9).

2. Dispositif selon la revendication 1,
caractérisé en ce qu'
il présente un dispositif de division multiple des rayons équipé de prismes de déflection (14) et de miroirs de déflection (15) pour la division des différents rayons du laser d'éclairage, des paires de conducteurs lumineux (5, 7) étant orientés vers des détecteurs (9) existant en nombre semblable.

3. Dispositif selon les revendications 2 et 3,
caractérisé en ce que
des élévateurs au carré (16', 16'') et/ou des formateurs de valeurs absolues auxquels fait suite un totalisateur commun (17) dont le circuit de sortie est commuté pour un traitement de données sont placés en aval des détecteurs (9', 9'').
